# EUROPEAN PATENT APPLICATION

(11) **EP 4 224 581 A1**
(43) Date of publication of application: **09.08.2023**
(21) Application number: 21873870.6
(22) Date of filing: 10.05.2021
(51) Int. Cl.: H01M 4/66

(54) **COMPOSITE CURRENT COLLECTOR, PREPARATION METHOD, AND LITHIUM ION BATTERY**

(30) Priority: 30.09.2020 CN 202011058984
(71) Applicant: Jiangsu Advanced Material Tech Co., Ltd, Liyang, Jiangsu 213300 (CN)
(72) Inventor: ZHANG, Lei, Liyang, Jiangsu 213300 (CN); WANG, Xiaoming, Liyang, Jiangsu 213300 (CN); WEI, Fengjie, Liyang, Jiangsu 213300 (CN)
(74) Representative: De Bonis, Paolo
(86) International application number: PCT/CN2021/092598
(87) International publication number: WO 2022/068207

(57) **Abstract**

Provided is a composite current collector. The composite current collector includes a support layer (1), a first conductor layer (2), a second conductor layer (3), and a welding region (4). The support layer (1) is made of a polymer. The first conductor layer (2) is disposed on a first side of the support layer (1). The second conductor layer (3) is disposed on a second side of the support layer (1). In the welding region (4), no polymer is provided between the first conductor layer (2) and the second conductor layer (3).

## Description

The present application claims priority to Chinese Patent Application No. 202011058984.0 filed with the China National Intellectual Property Administration (CNIPA) on Sep. 30, 2020, the disclosure of which is incorporated herein by reference in its entirety.

### TECHNICAL FIELD

The present application relates to the technical field of secondary batteries, for example, a composite current collector, a preparation method, and a lithium ion battery.

### BACKGROUND

Lithium ion batteries consist of basic cells wound or stacked. The basic cells are positive electrode, separator, and negative electrode. The positive electrode and the negative electrode are where an electrochemical reaction takes place. A current generated by the electrochemical reaction is collected and led out by a current collector in the positive electrode and the negative electrode. The separator is responsible for separating the positive electrode and the negative electrode, preventing short circuits from contact between the two electrodes.

A common configuration of the current collector is as follows: Copper foil material is used for the negative electrode, and aluminum foil material is used for the positive electrode. Due to the use of metal materials, the positive and negative current collectors account for a relatively large proportion (about 8%) of the total weight of battery cells. Therefore, reducing the weight of current collectors is an effective way to increase the energy density (kWh/kg) of lithium-ion batteries. In Chinese patent applications with the publication numbers CN106654285A and CN101071860A, low-density current collectors can be prepared by a method where a conductive coating is prepared on the surface of the flexible substrate. For another example, the Chinese patent application with the publication number CN110277532A discloses a method and equipment for processing a current collector of a secondary battery. The method is transporting the current in the battery cell through the transfer between the foil material and the composite current collector, where the foil acts as the tab of the composite current collector. However, the preceding technical solutions have the following disadvantages: 1. The tab is connected to the metal conductor layer on one side only, making it difficult to lead out the current through the metal conductor layers on two sides; and 2. The metal conductor layers on two sides of the composite collector are usually thin and therefore difficult to weld.

The Chinese patent application with the publication number CN110165223A discloses a composite current collector that has a porous structure. A conductor layer is inside a hole so that the metal conductor layers on two sides of the composite current collector are conducted. However, the current collector needs to be punched, the conductor layer inside the hole is difficult to manufacture, and the conduction effect is poor, which is unfavorable for popularization and application of the composite current collector. The utility model of authorized notification number CN208051145U discloses an ultrasonic welding head and welding equipment. Through the extrusion effect of the conical structure of the welding head during welding, the polymer layer of the welding region is penetrated to weld the metal conductor layers of the welding region together. In this manner, the two metal conductor layers, while welded, are mutually conductive. However, this welding process can easily cause over-welding, destroying the metal conductor layers in the welding region and leading to a low welding strength and poor electrical conductivity.

### SUMMARY

The following is a summary of the subject matter described herein in detail. This summary is not intended to limit the scope of the claims.

The present application provides a composite current collector to improve a situation where in the related art, it is difficult to weld a tab of a composite current collector, and conduction layers on two sides of the composite current collector are not easy to be conducted.

Embodiments of the present application adopt the following technical scheme: A composite current collector is provided and includes a support layer, a first conductor layer, a second conductor layer, and a welding region. The support layer is made of a polymer. The first conductor layer is disposed on one side of the support layer. The second conductor layer is disposed on the other side of the support layer. In the welding region, no polymer is provided between the first conductor layer and the second conductor layer.

Embodiments of the present application also disclose a method for preparing a composite current collector as described above. The current collector includes conductor layers and a support layer. The method includes pressing conductor layer materials into the conductor layers and compounding the conductor layers on a first side and a second side of the support layer. Embodiments of the present application also disclose a lithium ion battery. The lithium ion battery includes a positive pole piece, a negative pole piece, a separator, and an electrolyte. The positive pole piece and/or the negative pole piece includes the composite current collector as described above.

Other aspects can be understood after the drawings and the detailed description are read and understood.

### BRIEF DESCRIPTION OF DRAWINGS

The present application is further described with reference to drawings and in conjunction with embodiments.
FIG. 1 is a diagram illustrating the structure of a composite current collector according to an embodiment of the present application.
FIG. 2 is a top view of the composite current collector of FIG. 1.
FIG. 3A is a diagram illustrating the structure of a composite current collector according to another embodiment of the present application.

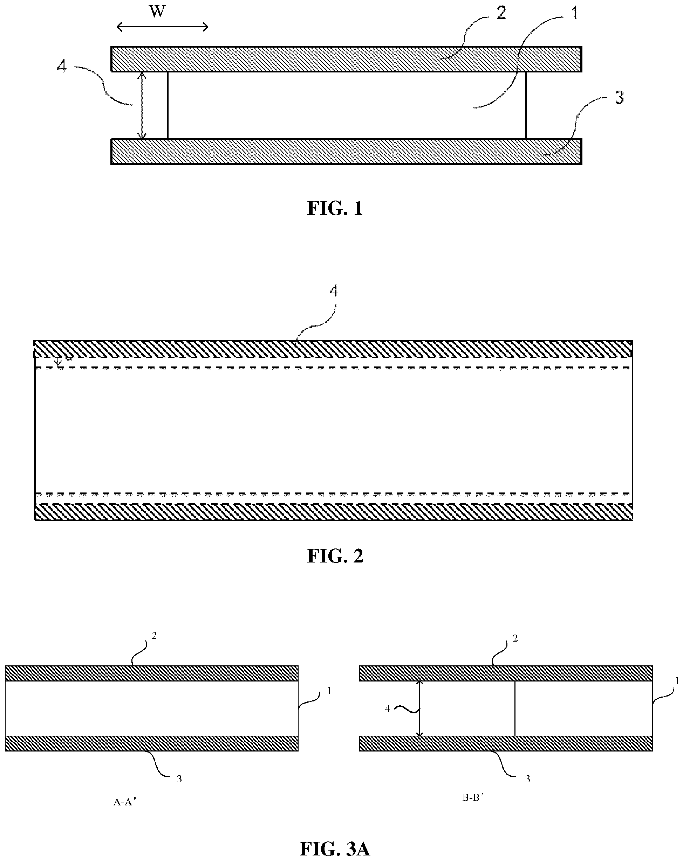

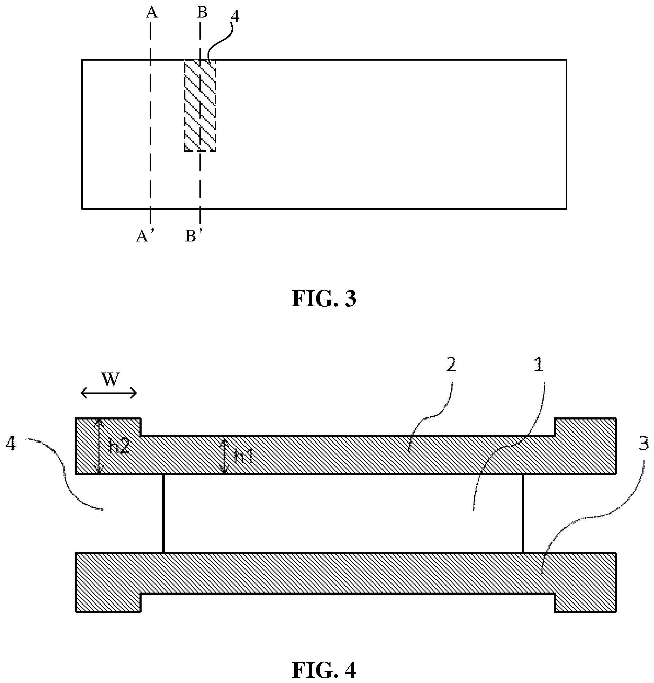

FIG. 3 is a top view of the composite current collector of FIG. 3A.
FIG. 4 is a diagram illustrating the structure of a composite current collector according to a third embodiment of the present application.

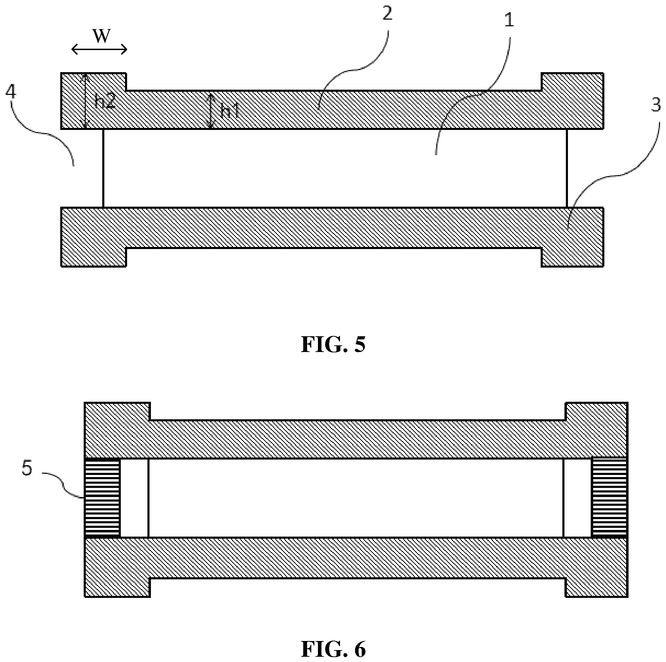

FIG. 5 is a diagram illustrating the structure of a composite current collector according to a fourth embodiment of the present application.
FIG. 6 is a diagram illustrating the structure of a composite current collector according to a fifth embodiment of the present application.

### Reference list

- 1: support layer
- 2: first conductor layer
- 3: second conductor layer
- 4: welding region
- 5: conductive adhesive

### DETAILED DESCRIPTION

Embodiments of the present application are described in detail with reference to the drawings. It should be understood that the example embodiments described herein are part, not all, of the embodiments of the present application. These example embodiments described herein are merely intended to explain and are not to limit the embodiments of the present application. All other embodiments obtained by those of ordinary skill in the art on the premise that no creative work is done are within the scope of the present application.

In the description of the present application, it should be noted that the orientational or positional relationships indicated by terms "center", "middle", "above", "below", "left", "right", "inside", "outside", "top", "bottom", "side", "vertical", "horizontal", and the like are based on the orientational or positional relationships illustrated in the drawings, which are merely for the purpose of facilitating and simplifying the description of the present application, and these relationships do not indicate or imply that the device or component referred to has a specific orientation and is constructed and operated in a specific orientation, and thus it is not to be construed as limiting the present application. Moreover, terms like "one", "first", "second", "third", "fourth", "fifth" and "sixth" are merely for describing the object and are not to be construed as indicating or implying relative importance.

In the description of the present disclosure, it should be noted that unless otherwise expressly specified and limited, terms like "mounted", "connected to each other", "connected" are to be construed in a broad sense, for example, as permanently connected, detachably connected, or integratedly connected; mechanically connected or electrically connected; directly connected or indirectly connected via an intermediate medium; or internally connected of two elements. For those of ordinary skill in the art, specific meanings of the preceding terms in the present application can be construed depending on specific contexts.

For purposes of simplicity and illustration, principles of the embodiments are mainly described with reference to examples. In the following description, numerous specific details are set forth to provide a thorough understanding of the embodiments. However, it is apparent that for those of ordinary skill in the art, in practice these embodiments may not be limited to these details. In some examples, well-known methods and structures have not been described in detail to avoid unnecessary difficulties in understanding these embodiments. In addition, all the embodiments can be used in combination.

FIG. 1 is a diagram illustrating the structure of a composite current collector according to the present application. FIG. 2 is a top view of the composite current collector of FIG. 1. As shown in FIGS. 1 and 2, the composite current collector includes a support layer 1, a first conductor layer 2, and a second conductor layer 3. The first conductor layer 2 is compounded on one side of the support layer 1. The second conductor layer 3 is compounded on the other side of the support layer 1. The support layer 1 is made of a polymer for providing support force. The first conductor layer 2 and the second conductor layer 3 generally adopt the same conductive material for leading out current.

In FIG. 2, the dashed lines indicate positions where the support layer 1 intersects with the first conductor layer 2 and the second conductor layer 3, and the hatched lines indicate the welding region 4.

In this regard, to make it easier to weld the tab of the composite current collector, the preceding composite current collector also includes at least one welding region 4 in which no polymer for preparing the support layer 1 is provided between the first conductor layer 2 and the second conductor layer 3 (therefore, the welding region 4 in FIG. 2 is not extended to the dotted lines). The welding region 4 is provided without the polymer. In this manner, when the tab is welded, the first conductor layer 2 and the second conductor layer 3 may be mutually electrically connected without the support layer 1 being penetrated, and the current generated on the first conductor layer 2 and the second conductor layer 3 is led out. Thus, the situation where in the related art, it is difficult to weld the tab of the composite current collector, and conduction layers on two sides of the composite current collector are not easy to be conducted is improved.

The polymer material adopted in the support layer 1 is one or more of polyethylene terephthalate (PET), polypropylene (PP), polyethylene (PE), polyimide (PI), or polyarylsulfone. Alternatively, other insulating materials featured by lightweight and high-strength may also be adopted as a substitute. In an embodiment, the thickness of the support layer 1 is in the range of 2 micrometer to 6 micrometer.

The first conductor layer 2 and the second conductor layer 3 may be made of aluminum, copper, nickel, silver, gold, carbon, stainless steel, or an alloy thereof. In an embodiment, the first conductor layer 2 and the second conductor layer 3 that are used as the positive current collector are generally made of an aluminum or aluminum alloy material. The first conductor layer 2 and the second conductor layer 3 that are used as the negative current collector are generally made of a copper or copper alloy material.

The thickness of the first conductor layer 2 is in the range of 0.2 micrometer to 5 micrometer. The thickness of the second conductor layer 3 is in the range of 0.2 micrometer to 5 micrometer. If the thickness of the first conductor layer 2 and the second conductor layer 3 is less than 0.2 micrometer, the conductivity is insufficient and the internal resistance is large. If the thickness exceeds 5 micrometer, the thickness and the weight are excessively large, affecting the energy density of the battery.

In the present application, the area of the welding region 4 occupies 0.5% to 30% of the area of the first conductor layer 2 (or the second conductor layer 3). If the area proportion of the welding region 4 exceeds 30%, the first conductor layer 2 and the second conductor layer 3 do not have enough support area (provided by the support layer 1) and are liable to be damaged. If the area proportion of the welding region is less than 0.5%, no sufficient area is provided for welding the tab.

The welding region 4 may be embodied in various shapes such as a rectangle, a circle, an ellipse, a sector, or a polygon, or is in an irregular figure, and is not limited to the present application. The welding region 4 may also be disposed at any location on the composite current collector. In an embodiment, the welding region may be located at an edge of the composite current collector to facilitate subsequent welding of the tab.

For example, as shown in FIGS. 1 and 2, the direction indicated by W is the direction of width. The welding region 4 is formed in the following manner: The width of the first conductor layer 2 and the width of the second conductor layer 3 are each wider than the width of the support layer 4. In this manner, when the first conductor layer 2 and the second conductor layer 3 are compounded on two sides of the support layer 4, the welding region 4 can be naturally formed at the edge of the composite current collector, without additional operation on the support layer 4.

FIG. 3A is a diagram illustrating the structure of a composite current collector according to another embodiment of the present application. FIG. 3 is a top view of the composite current collector of FIG. 3A. As shown in FIGS. 3A and 3, the welding region 4 may also be formed by hollowing out the support layer. The hollowed-out region is indicated by hatched lines in FIG. 3, where a hollowed-out region is not provided at A-A', but provided at B-B' (namely, the welding region 4).

FIG. 4 is a diagram illustrating the structure of a composite current collector according to a third embodiment of the present application. In FIG. 4, on the basis of FIG. 1, the thickness of the first conductor layer 2 and/or the second conductor layer 3 in the welding region 4 is made greater than the thickness of the rest region so that a thickened region is formed. In an embodiment, on the first conductor layer 1, the thickness of the thickened region in the welding region 4 is h2, and the thickness of the rest region is h1, where h2 > h1. This configuration can enhance the strength of the welding region 4 and avoid damage during processing. In addition, this configuration can also increase the thickness of the first conductor layer 2 and the second conductor layer 3 to enhance the welding strength.

FIG. 5 is a diagram illustrating the structure of a composite current collector according to a fourth embodiment of the present application. In FIG.5, on the basis of FIG. 4, W indicates the direction of width. The edge of the thickened region is wider than that of the welding region 4, and the width of the edge of the thickened region is in the range of 0.5 mm to 10 mm. In this manner, the edge of the thickened region overlaps the edge of the support layer 1, enhancing the strength of the welding region 4 and avoiding breakage of the conductor layers at the edge of the welding region 4.

FIG. 6 is a diagram illustrating the structure of a composite current collector according to a fifth embodiment of the present application. In FIG. 6, on the basis of FIG. 4, in the welding region 4, a conductive adhesive 5 is disposed between the first conductor layer 2 and the second conductor layer 3. In this manner, the bonding of the conductive adhesive 5 can improve the strength of the welding region 4, avoid damage, and improve the strength of the first conductor layer 2 and the second conductor layer 3 after welding.

In the preceding technical scheme, a preparation method of the composite current collector may include the steps of pressing conductor layer materials into the conductor layers and then compounding the conductor layers and the support layer material. The conductor layers and the support layer may be connected and compounded by an adhesive. Each of the composite conductor layers after the compounding is completed may be thinned by a chemical or electrochemical method.

In this regard, if it is desired to form the preceding thickened region on the composite current collector, only the surface of the conductor layer on the welding region needs to be provided with a barrier to prevent corrosion of the conductor layer on the welding region. The barrier may be a tape that needs to be removed after the thinning is complete.

In the preceding technical schemes, the preceding composite current collector can be used to prepare a pole piece. A positive electrode active material is coated on the surface of the current collector to obtain a positive pole piece. A negative electrode active material is coated on the surface of the current collector to obtain a negative pole piece. The positive pole piece, the separator, and the negative pole piece are assembled in a winding manner to form a dry battery cell. The dry battery cell is put into a battery housing and the electrolyte is injected. After charging and forming, the secondary battery is made.

The present application is illustrated below in conjunction with embodiments, but the present application is not limited herein.

### [Example 1]

An aluminum material with a purity of 99.7% is rolled to obtain a 5-micrometer thick aluminum foil. The 5-micrometer thick aluminum foil is compounded by an adhesive on two sides of a PET having the thickness of 5 micrometer to form a positive current collector. The molecular weight of the PET is 192.17. The adhesive is WB888 adhesive manufactured by Wuxi Yuke. The temperature for compounding is 95 degrees Celsius. The pressure for compounding is 0.5 Mpa. The resting time after the compounding is 150 hours. The width of the 5-micrometer thick aluminum foil is 100 mm. The width of the PET is 80 mm. The area proportion of the welding region is 20%.

20% NaOH solution is used for chemical etching, the temperature for the etching is 45 degrees Celsius, and the etching time is 1 minute. Then deionized water is used for rinsing and drying. The thickness of the aluminum layer on one side is 3 micrometer after the chemical etching.

### [Example 2]

Example 2 differs from example 1 in that a 4-micrometer thick PET material is used as the support layer and a 3-micrometer thick aluminum foil is used as the conductor layer. The width of the aluminum foil is 100 mm. The width of the PET is 90 mm. The area proportion of the welding region is 10%.

When the 20% NaOH solution is used for chemical corrosion thinning, the surface of the conductor layer on the welding region is covered with the tape to form a thickened region whose width is 1 mm wider than that of the welding region. After the aluminum foil is thinned, the thickness of the thickened region is 3 micrometer, and the thickness of the rest region is 2 micrometer.

### [Example 3]

Example 3 differs from example 1 in that a 3-micrometer thick PP material is used as the support layer and a 5-micrometer thick aluminum foil is used as the conductor layer. The width of the aluminum foil is 100 mm. The width of the PET is 95 mm. The area proportion of the welding region is 5%.

When the 20% NaOH solution is used for chemical corrosion thinning, the surface of the conductor layer on the welding region is covered with the tape to form a thickened region. After the aluminum foil is thinned, the thickness of the thickened region is 5 micrometer, and the thickness of the rest region is 2 micrometer.

### [Example 4]

Example 4 differs from example 1 in that a 2-micrometer thick PE material is used as the support layer and a 10-micrometer thick aluminum foil is used as the conductor layer. The width of the aluminum foil is 100 mm. The width of the PET is 70 mm. The area proportion of the welding region is 30%.

When the 20% NaOH solution is used for chemical corrosion thinning, the surface of the conductor layer on the welding region is covered with the tape to form a thickened region. After the aluminum foil is thinned, the thickness of the thickened region is 10 micrometer, and the thickness of the rest region is 5 micrometer. In addition, the welding region is filled with the conductive adhesive.

### [Example 5]

Example 5 differs from example 1 in that a 6-micrometer thick PI material is used as the support layer and a 2-micrometer thick aluminum foil is used as the conductor layer. The width of the aluminum foil is 100 mm. The width of the PET is 75 mm. The area proportion of the welding region is 25%.

When the 20% NaOH solution is used for chemical corrosion thinning, the surface of the conductor layer on the welding region is covered with the tape to form a thickened region. After the aluminum foil is thinned, the thickness of the thickened region is 2 micrometer, and the thickness of the rest region is 0.5 micrometer. In addition, the welding region is filled with the conductive adhesive.

### [Example 6]

Copper with a purity of 99.7% is rolled to obtain a 5-micrometer thick copper foil. The 5-micrometer thick copper foil is compounded by an adhesive on two sides of a 5-micrometer thick PET to form a positive current collector. The molecular weight of the PET is 192.17. The adhesive is WB888 adhesive manufactured by Wuxi Yuke. The temperature for the compounding is 95 degrees Celsius. The pressure for the compounding is 0.5 Mpa. The resting time after the compounding is 150 hours. The width of the 4-micrometer copper foil is 100 mm. The width of the PET is 80 mm. The area proportion of the welding region is 20%.

20% NaOH solution is used for chemical etching, and the temperature for the etching is 45 degrees Celsius. The etching time is 1 minute. Then deionized water is used for rinsing and drying. The thickness of the copper foil on one side is 4 micrometer after the chemical etching.

### [Example 7]

Example 7 differs from example 6 in that a 4-micrometer thick PP material is used as the support layer and a 6-micrometer thick copper foil is used as the conductor layer. The width of the copper foil is 100 mm. The width of the PET is 90 mm. The area proportion of the welding region is 10%. The thickness of the thinned copper foil on one side is 5 micrometer.

### [Example 8]

Example 8 differs from example 6 in that a 3-micrometer thick PET material is used as the support layer and a 3-micrometer thick copper foil is used as the conductor layer. The width of the copper foil is 100 mm. The width of the PET is 99 mm. The area proportion of the welding region is 1%.

When the 20% NaOH solution is used for chemical corrosion thinning, the surface of the conductor layer on the welding region is covered with the tape to form a thickened region whose width is 0.5 mm wider than that of the welding region. After the aluminum foil is thinned, the thickness of the thickened region is 3 micrometer, and the thickness of the rest region is 1 micrometer.

### [Example 9]

Example 9 differs from example 6 in that a 2-micrometer thick polyarylsulfone material is used as the support layer and a 3-micrometer thick copper foil is used as the conductor layer. The width of the copper foil is 100 mm. The width of the PET is 85 mm. The area proportion of the welding region is 15%.

When the 20% NaOH solution is used for chemical corrosion thinning, the surface of the conductor layer on the welding region is covered with the tape to form a thickened region. After the aluminum foil is thinned, the thickness of the thickened region is 3 micrometer, and the thickness of the rest region is 0.5 micrometer. In addition, the welding region is filled with the conductive adhesive.

### [Example 10]

Example 10 differs from example 6 in that a 5-micrometer thick PE material is used as the support layer and a 6-micrometer thick copper foil is used as the conductor layer. The width of the copper foil is 100 mm. The width of the PET is 70 mm. The area proportion of the welding region is 30%.

When the 20% NaOH solution is used for chemical corrosion thinning, the surface of the conductor layer on the welding region is covered with the tape to form a thickened region. After the aluminum foil is thinned, the thickness of the thickened region is 6 micrometer, and the thickness of the rest region is 2 micrometer. In addition, the welding region is filled with the conductive adhesive.

### [Comparative example 1]

Comparative example 1 differs from example 1 in that the width of the aluminum foil coincides with the width of the PET, and no welding region is provided.

### [Comparative example 2]

Comparative example 2 differs from example 1 in that a 4-micrometer thick PP material is used as the support layer, and the thickness of the aluminum foil is reduced to 1.5 micrometer.

### [Comparative example 3]

Comparative example 3 differs from example 6 in that the width of the copper foil coincides with the width of the PET, and no welding region is provided.

### [Comparative example 4]

Comparative example 4 differs from example 6 in that a 4-micrometer thick PE material is used as the support layer, and the thickness of the copper foil is reduced to 1 micrometer.

To illustrate the technical scheme of the present application, 300 pieces of the current collector in the preceding embodiments and comparative examples are made, the tabs are welded, and the welding success rate is calculated. Meanwhile, the tensile strength of the completed current collectors is tested. The test adopts the test standard for the tensile strength of metal foil materials recorded in HB 5280-1996. The test results are described in Table 1.

**Table 1**

| | Welding Success Rate | Tensile Strength (N) | | | Welding Success Rate | Tensile Strength (N) |
|---|---|---|---|---|---|---|
| Example 1 | 95% | 25 | | Example 6 | 96% | 42 |
| Example 2 | 100% | 55 | | Example 7 | 100% | 65 |
| Example 3 | 97% | 60 | | Example 8 | 100% | 57 |
| Example 4 | 100% | 85 | | Example 9 | 100% | 71 |
| Example 5 | 100% | 58 | | Example 10 | 100% | 82 |
| Comparative Example 1 | 8% | 13 | | Comparative Example 3 | 5% | 15 |
| Comparative Example 2 | 26% | 4 | | Comparative Example 4 | 15% | 2 |

As described in Table 1, it can be seen by comparing example 1 and comparative example 2, example 6 and comparative example 3, that by providing a welding region without the polymer, the welding success rate of the tabs can be greatly improved, and the tensile strength of the current collector after welding can also be ensured. Meanwhile, the thickness of the conductor layer is also one of the factors that affect the tab welding and the tensile strength of the current collector. However, the impact of an excessively thin conductor layer can be overcome by technical means such as providing a thickened region, expanding the range of the thickened region, or filling a conductive adhesive, thereby improving the welding success rate of the tabs and the tensile strength of the current collector.

The current collectors prepared in the preceding embodiments 1 to 10 and comparative examples 1 to 4 are made into batteries. The failure ratio of vibration tests, the failure ratio of 300 cycles, combinations of the current collectors, and the test results are described in Table 2. The failure ratio of vibration tests is obtained by the 7.3 vibration test in GB 31241-2014. The failure ratio of 300 cycles is obtained by the following method: 1C/1C charge and discharge test is performed at a temperature of 25°C, and the failure ratio of batteries without voltage output after 300 cycles is recorded.

**Table 2**

| | Positive Current Collector | Negative Current Collector | Failure Ratio of Vibration Tests | Failure Ratio of 300 Cycles |
|---|---|---|---|---|
| Example 11 | Example 1 | Example 6 | 10% | 3% |
| Example 12 | Example 2 | Example 7 | 0% | 0% |
| Example 13 | Example 3 | Example 8 | 0% | 0% |
| Example 14 | Example 4 | Example 9 | 0% | 0% |
| Example 15 | Example 5 | Example 10 | 0% | 0% |
| Example 16 | Example 1 | Example 8 | 2% | 0% |
| Comparative Example 5 | Example 1 | Comparative Example 3 | 75% | 13% |
| Comparative Example 6 | Example 1 | Comparative Example 4 | 100% | 25% |
| Comparative Example 7 | Comparative Example 1 | Example 6 | 75% | 11% |
| Comparative Example 8 | Comparative Example 2 | Example 6 | 100% | 19% |

As described in Table 2, the failure ratio of vibration tests and the failure ratio of 300 cycles of batteries (comparative examples 5 to 8) made of composite current collectors in the related art are significantly higher than those of the batteries (examples 11 to 16) made of the composite current collectors described in the present application, representing that when applied to a secondary battery, the composite current collector described in the present application can greatly improve the safety performance and service life of the secondary battery.

Although the illustrative examples of the present application have been described above to facilitate understanding of the present application by those skilled in the art, the present application is not limited to the scope of the examples. For those of ordinary skill in the art, as long as the various changes are within the spirit and scope of the present application defined and determined by the appended claims, all applications and creations that utilize the concepts of the present application are within the protection.

## Claims

1. A composite current collector, comprising:
a support layer made of a polymer;
a first conductor layer disposed on a first side of the support layer;
a second conductor layer disposed on a second side of the support layer; and
a welding region,
wherein in the welding region, no polymer is provided between the first conductor layer and the second conductor layer.

2. The composite current collector of claim 1, wherein the support layer is made of at least one of polyethylene terephthalate, PET, polypropylene, PP, polyethylene, PE, polyimide, PI, or polyarylsulfone.

3. The composite current collector of claim 1, wherein the first conductor layer and the second conductor layer are each made of a material of one of aluminum; copper; nickel; silver; gold; carbon; stainless steel; an aluminum alloy; a copper alloy; a nickel alloy; a silver alloy; a gold alloy; a carbon alloy; a mixture composed of carbon and at least one of aluminum, copper, nickel, silver, or gold; a mixture composed of stainless steel and carbon; a mixture composed of carbon and at least one of an aluminum alloy, a copper alloy, a nickel alloy, a silver alloy, or a gold alloy; or a mixture of a carbon alloy and carbon.

4. The composite current collector of claim 1, wherein a thickness of the first conductor layer is in a range of 0.2 micrometer to 5 micrometer, and a thickness of the second conductor layer is in a range of 0.2 micrometer to 5 micrometer.

5. The composite current collector of claim 1, wherein an area of the welding region occupies 0.5% to 30% of an area of the first conductor layer.

6. The composite current collector of claim 1, wherein the welding region is a rectangle, a circle, an ellipse, a sector, or a polygon, or the welding region is in an irregular shape.

7. The composite current collector of claim 1, wherein the welding region is located at an edge of the composite current collector.

8. The composite current collector of claim 1, wherein the welding region is formed in the following manner: a width of the first conductor layer and a width of the second conductor layer are each wider than a width of the support layer.

9. The composite current collector of claim 1, wherein the welding region is formed in the following manner: the support layer is hollowed out.

10. The composite current collector of claim 1, wherein in the welding region, a conductive adhesive is disposed between the first conductor layer and the second conductor layer.

11. The composite current collector of claim 1, wherein
a thickness of the first conductor layer in the welding region is greater than a thickness of the first conductor layer outside the welding region so that a thickened region is formed;
a thickness of the second conductor layer in the welding region is greater than a thickness of the second conductor layer outside the welding region so that a thickened region is formed; or
a thickness of the first conductor layer in the welding region is greater than a thickness of the first conductor layer outside the welding region, and a thickness of the second conductor layer in the welding region is greater than a thickness of the second conductor layer outside the welding region, so that a thickened region is formed.

12. The composite current collector of claim 11, wherein a width of the thickened region is 0.5 mm to 10 mm greater than a width of the welding region.

13. A method for preparing a composite current collector, wherein the method is configured for preparing the composite current collector of claim 1, the composite current collector comprises conductor layers and a support layer, and the method comprises pressing conductor layer materials into the conductor layers and compounding the conductor layers on the first side and the second side of the support layer.

14. The method of claim 13, wherein each of the conductor layers is connected to the support layer by an adhesive.

15. The method of claim 13, wherein each of the conductor layers is thinned by a chemical or electrochemical method.

16. A lithium ion battery, comprising a positive pole piece, a negative pole piece, a separator, and an electrolyte, wherein
at least one of the positive pole piece or the negative pole piece comprises the composite current collector of any one of claims 1 to 15.
